# EUROPÄISCHE PATENTSCHRIFT

(11) **EP 0 963 311 B1**
(45) Veröffentlichungstag und Bekanntmachung des Hinweises auf die Patenterteilung: **03.07.2002**
(21) Anmeldenummer: 98913609.8
(22) Anmeldetag: 27.02.1998
(51) Int. Cl.: B60T 8/48, B60T 8/36, B60T 13/68

(54) **HYDRAULISCHE FAHRZEUGBREMSANLAGE**
HYDRAULIC VEHICLE BRAKE SYSTEM
SYSTEME HYDRAULIQUE DE FREINAGE DE VEHICULE

(30) Priorität: 01.03.1997 DE 19708425
(43) Veröffentlichungstag der Anmeldung: 15.12.1999
(73) Patentinhaber: Continental Teves AG & Co. oHG, 60488 Frankfurt (DE)
(72) Erfinder: BECK, Erhard, D-35781 Weilburg (DE)
(86) Internationale Anmeldenummer: EP9801136
(87) Internationale Veröffentlichungsnummer: WO9838069

(56) Entgegenhaltungen:
- EP-A- 0 482 367
- DE-A- 4 213 710
- DE-A- 19 515 281
- DE-C- 4 232 311

## Beschreibung

Die Erfindung bezieht sich auf eine hydraulische Fahrzeugbremsanlage mit einem vom Fahrer des Fahrzeuges betätigbaren Bremsdruckgeber sowie einem Vorladedruckgeber gemäß dem Oberbegriff des Anspruchs 1.

Eine hydraulische Fahrzeugbremsanlage besteht in der Grundausstattung aus einem pedalbetätigten Bremsdruckgeber und daran angeschlossenen Bremskreisen mit Radbremsen. Wenn der Fahrer eine Bremsung einleiten möchte, betätigt er das Pedal, wobei die auf das Pedal ausgeübte Kraft gegebenenfalls verstärkt auf einen Hauptbremszylinder übertragen wird. Dadurch wird in den Bremskreisen ein Druck aufgebaut, der in den Radbremsen wirksam wird und dazu führt, daß die Drehgeschwindigkeit der Räder gegenüber ihrer Rollgeschwindigkeit verkleinert wird. Dies hat zur Folge, daß in den Aufstandsflächen der Räder Bremskräfte übertragen werden, die zu einer Verzögerung des Fahrzeuges führen.

Bei einer solchen Bremsung können die Räder blockieren. Sehr früh wurde daher schon vorgeschlagen, die Bremsanlage so zu erweitern, daß eine Modulation der Radbremsdrücke in Anpassung an die übertragbaren Bremskräfte erfolgen kann. Eine solche Erweiterung besteht aus Druckmodulationsventilen, nämlich einem Einlaß- und einem Auslaßventil, deren Schaltzustände bestimmen, ob den Radbremsen Druckmittel zur Druckabsenkung entnommen oder Druckmittel zur Druckerhöhung zugeführt wird. Weiterhin gehört dazu eine Pumpe, die Druckmittel in den Bremskreis fördert, um das für die Modulation der Radbremsdrücke entnommene Druckmittel zu ersetzen. Die konkrete Ausgestaltung des Systems kann in vielfacher Weise erfolgen. Häufig wird das sogenannte Rückförderprinzip eingesetzt, bei dem die Pumpe als nicht selbstansaugende Rückförderpumpe ausgebildet ist, die das über das offene Auslaßventil aus den Radbremsen entnommene Druckmittel unmittelbar in den Bremskreis oberhalb des Einlaßventils zurückfördert. Das Blockieren der Räder kann während einer Bremsung durch geeignete Ansteuerung der Ventile und der Pumpe wirkungsvoll unterbunden werden.

Eine solche blockiergeschützte Fahrzeugbremsanlage kann nun weitergebildet werden zu einer Bremsanlage mit einer Fahrstabilitäts- bzw. einer Antriebsschlupfregelung (FSR bzw. ASR). Bei einer Antriebsschlupfregelung wird in den Radbremsen der angetriebenen Räder ein Druck aufgebaut, wobei das dabei erzeugte Bremsmoment dem Antriebsmoment soweit entgegenwirkt, bis dies auf ein Maß reduziert ist, das in den Aufstandsflächen der angetriebenen Räder abgestützt werden kann. Bei diesem Verfahren wird also das Durchdrehen der Räder beim Anfahren vermieden.
Bei einer Fahrstabilitätsregelung wird an den Rädern des Fahrzeuges ein radindividueller Bremsdruck aufgebaut, so daß durch die dabei erzeugten Bremskräfte ein Moment um die Hochachse des Fahrzeuges erzeugt wird, das einer zu hohen Gierwinkelgeschwindigkeit des Fahrzeugs entgegenwirkt.

Diesen beiden Regelungen sowie einigen anderen nicht genannten Regelungen ist gemein, daß in einzelnen oder allen Radbremsen ein Radbremsdruck erzeugt werden muß, ohne daß eine Pedalbetätigung erfolgt. Diese Bremsungen werden daher als Fremdkraftbremsungen bezeichnet. Bei einer solchen Bremsung müssen in einer Füllphase zunächst die Radbremsen mit Druckmittel gefüllt werden, um einen Startbremsdruck zu erzeugen, der dann in Anpassung an die gewählte jeweilige Regelung in einer sich anschließenden Regelphase moduliert werden kann.

Zum Aufbau des Startbremsdruckes wird die Pumpe des Blokkierschutzregelsystems eingesetzt. Dabei hat sich gezeigt, daß diese Pumpe nicht in allen Fällen in der Lage ist, allein den benötigten Startbremswert ausreichend schnell aufzubauen. Es werden daher sogenannte Vorladedruckgeber in die Bremsanlage eingebaut, die in der Füllphase Druckmittel entweder direkt in die Radbremsen (direkter Pfad) oder an die Saugseite der Pumpe liefern, die es unter Druckerhöhung an die Radbremsen weiterleitet (mittelbarer Pfad).

Beim Vorladedruckgeber kann es sich um eine Zusatzpumpe handeln, wie dies z.B. in der DE 4213710 A1 beschrieben ist. Es sind aber auch Systeme denkbar, bei denen der Verstärker des pedalbetätigten Bremsdruckgebers derart angesteuert wird, daß er auch ohne Pedalbetätigung den Hauptbremszylinder betätigt, wobei die hydraulische Beschaltung der Bremskreise eine Verbindung des Hauptbremszylinders zur Saugseite der Pumpe vorsieht. Ein solches System ist z.B. in der DE 4425578 A1 angegeben.

In beiden Systemen ist zwischen dem Vorladedruckgeber (Pumpe oder fremdbetätigter Hauptbremszylinder) ein sogenanntes Umschaltventil vorgesehen, das die Verbindung zumindest in der Regelphase aber auch schon in der Füllphase einer Fremdkraftbremsung herstellt. Dazu werden schnellschaltende und große Querschnitte öffnende elektromagnetisch betätigbare Ventile eingesetzt, wie sie z.B. in der deutschen Patentanmeldung mit dem Aktenzeichen 19529272455 vom 12.08.1995 beschrieben sind.

In der Füllphase stellen diese Ventile nach einer kurzen Schaltzeit einen großen Querschnitt zur Verfügung, so daß der Vorladedruckgeber ausreichend Druckmittel zur Saugseite der (Rückförder-) Pumpe liefern kann. Der große Querschnitt hat allerdings den Nachteil, daß das Druckmittel der Pumpe ungedämpft zugeführt wird. Dies führt zu einer starken Geräuschbildung, da die Druckmittelsäule in der Zuleitung zur Pumpe mit Öffnen und Schließen des Saugventils der (als Kolbenpumpe ausgebildeten) Pumpe entweder stark beschleunigt oder ruckartig abgebremst wird. Die insbesondere durch das ruckartige Abbremsen erzeugten Druckstöße in der Saugleitung der Pumpe werden als Körperschall übertragen und als Luftschall abgegeben. Bei einer Fremdkraftbremsung treten somit erhebliche Geräusche auf, die vom Fahrer möglicherweise nicht richtig interpretiert und zumindest als unangenehm empfunden werden.

Die Erfindung beruht daher auf der Aufgabe, eine Fahrzeugbremsanlage der beschriebenen Art so weiterzubilden, daß eine Fremdkraftbremsung bei einem möglichst niedrigen Geräuschniveau möglich ist. Dazu schlägt die Erfindung vor, daß das Umschaltventil drei Schaltstellungen aufweist, nämlich eine geschlossene, eine offene und eine gedrosselte und daß das Steuergerät so ausgelegt ist, daß das Umschaltventil bei einer Fremdkraftbremsung in der Regelphase in seine gedrosselte Stellung gebracht wird und in der Füllphase zumindest für eine der vorgesehenen Regelungen in seine offene Stellung gebracht wird.

Aber auch bei den Regelungen, in denen normalerweise ein rascher Bremsdruckaufbau bis zum Startbremsdruck notwendig ist, ist es unter Umständen ausreichend, den Druckaufbau in der Füllphase nur über den direkten Pfad erfolgen zu lassen. Dies kann z.B. bei Bremsungen auf niedrigem Reibwert ausreichen, da dann der Vorladedruckgeber in der Lage ist, allein den Startbremsdruck zu erzeugen. Die Erfindung schlägt daher weiterhin vor, daß das Steuergerät eine Entscheidungsschaltung enthält, die aufgrund der ihr zur Verfügung stehenden Informationen den in der Füllphase zu erreichenden Startbremsdruck bestimmt und, wenn dieser kleiner ist als der vom Vorladedruckgeber erzeugbare Vordruck, in der Füllphase das Umschaltventil in seiner geschlossenen Stellung beläßt.

Es besteht weiterhin die Aufgabe, das Umschaltventil so zu gestalten, daß es die geforderten Schaltzustände auf möglichst einfache Weise darstellen kann. Dazu wird vorgeschlagen, daß es als bistabiles Ventil ausgebildet ist, wobei es in Abhängigkeit vom Eingangsdruck trotz gleicher Betätigungskraft entweder in die gedrosselte oder in die offene Stellung schaltet.

Ein derartiges bistabiles Ventil läßt sich auf unterschiedliche Weise gestalten. Im vorliegenden Fall wird vorgeschlagen, daß das Schaltventil zwei parallel angeordnete schaltbare Durchgänge aufweist, nämlich den eines Vorventils und den eines Hauptventils, wobei der Ventilsitz des einen Ventils am Ventilschließglied des anderen Ventils ausgebildet ist, und daß eine gemeinsame Betätigung für beide Ventile vorgesehen ist.

Weiterhin wird vorgeschlagen, daß einerseits das Ventilschließglied des Vorventils unmittelbar und andererseits das Ventilschließglied des Hauptventils über eine Leerwegkupplung mit dem Betätigungsstößel gekoppelt ist. Derartig ausgebildete Ventile werden z.B. eingesetzt, um ein Hauptventil großen Querschnitts rasch öffnen zu können. Durch Öffnen des Vorventils mit kleinem Querschnitt wird nämlich schon ein gewisser Druckausgleich erzeugt, so daß das Ventilschließglied des Hauptventils den Betätigungskräften nur einen geringen Widerstand entgegensetzt.

Die Erfindung schlägt daher vor, die Kenngrößen eines solchen Ventils (Öffnungsquerschnitte von Haupt- und Vorventil, Leerwege, Federkräfte und Betätigungskräfte) so abzustimmen, daß bei der Betätigung des Ventils unter Vordruck die Betätigungskräfte nicht ausreichen, die an dem Ventilschließglied des Hauptventils angreifenden Druckkräfte - hervorgerufen durch das Druckgefälle an der Blende des Vorventils - zu überwinden. Dies hat zur Folge, daß das Ventil, unter Druck geschaltet, in seiner gedrosselten Stellung verbleibt, wobei die Drosselungwirkung bestimmt wird durch die geschaltete Blende des Vorventils.

Wie oben schon erwähnt, kann es notwendig sein, das Schaltventil in der Füllphase in die offene und in der Regelphase in die gedrosselte Stellung zu schalten.

Dazu ist im Steuergerät eine Schaltsignalabfolge vorgesehen, mit der das offene Ventil zunächst wieder betätigungslos gestellt wird, so daß es schließt, um anschließend erneut betätigt zu werden, wobei es bei einem anliegenden Vordruck in die gedrosselte Stellung - wie oben erläutert - gebracht wird.

Die Erfindung soll im folgenden an Hand eines Ausführungsbeispiels, dargestellt in zwei Zeichnungen, näher erläutert werden. Dabei zeigen:

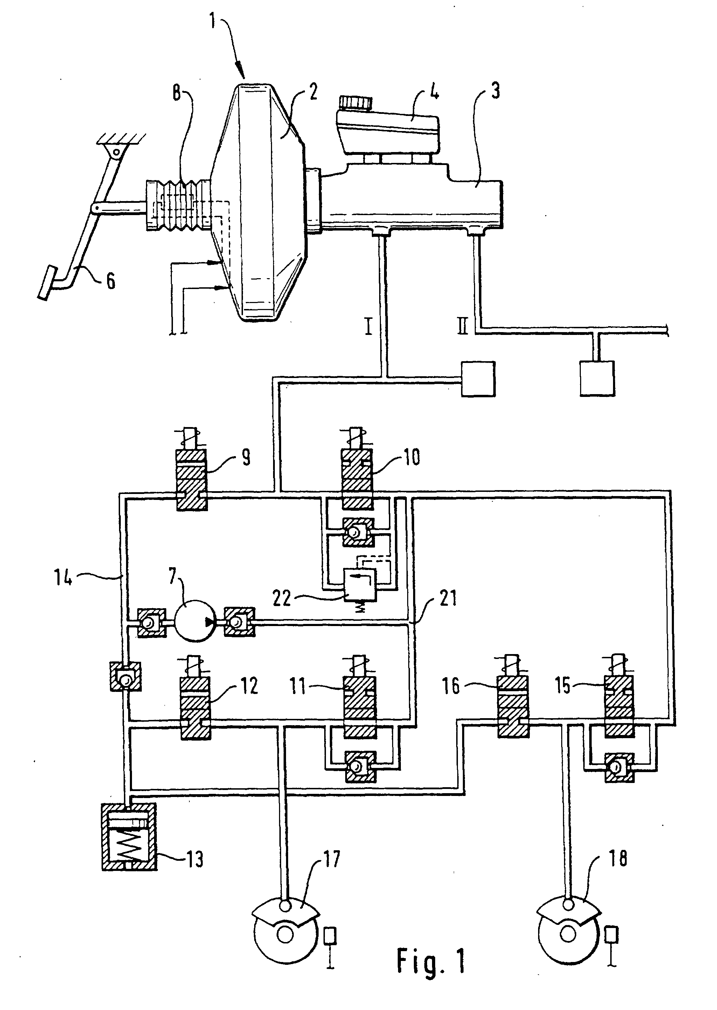

- Fig. 1: Einen hydraulischen Schaltplan der erfindungsgemäßen Bremsanlage, und die
- Fig. 2: einen Querschnitt durch das Umschaltventil der Bremsanlage.

Die Bremsanlage weist zwei Bremskreise I, II auf, deren Aufbau identisch ist, so daß die folgende Beschreibung sowohl auf den einen als auch auf den anderen Bremskreis zutrifft. Mit Hilfe eines Bremsdruckgebers 1 wird der gewünschte Druck in den Bremskreisen erzeugt. Der Bremsdruckgeber 1 wird mittels eines Pedals 6 betätigt und besteht aus einem pneumatischen Verstärker 2 und einem Tandemhauptbremszylinder 3, dessen Kammern in der nicht betätigten Grundstellung des Hauptbremszylinders mit einem Vorratsbehälters 4 verbunden sind. Die beiden Kammern sind außerdem über Bremsleitungen mit den Radbremsen 17, 18 jeweils eines Bremskreises verbunden. Die dargestellten Radbremsen 17, 18 gehören entweder zu den Rädern einer Achse (schwarz/weiß-Bremskreisaufteilung) oder aber zu diagonal am Fahrzeug gegenüberliegenden Rädern (Diagonal-Bremskreisaufteilung).

Um den in den Radbremsen wirkenden Radbremsdruck modulieren zu können, ist für jede Radbremse ein Einlaßventil 11, 15 und ein Auslaßventil 12, 16 sowie eine Rückförderpumpe 7 vorgesehen. Beide Ventile werden elektromagnetisch betätigt, wobei das Einlaßventil 11, 15 stromlos offen und das Auslaßventlil 12, 16 stromlos geschlossen ist. Das Einlaßventil 11, 15 liegt in der Bremsleitung, während das Auslaßventil 12, 16 jeweils die Verbindung zu einem Niederdruckspeicher 13 herstellt.

Um den Radbremsdruck zu senken, wird das Auslaßventil bei geschlossenem Einlaßventil geöffnet, so daß Druckmittel aus der Radbremse in den Niederdruckspeicher 13 abfließen kann. Um den Druck zu halten, werden beide Ventile geschlossen. Um den Druck erneut aufzubauen, wird das Einlaßventil wieder geöffnet.

Das in den Niederdruckspeicher 13 verbrachte Druckmittel wird mittels der Rückförderpumpe 7 wieder in den Bremskreis zurückgefördert. Die Druckseite der Pumpe ist dazu mit einem Knoten 21 in der gemeinsamen Bremsleitung oberhalb der Einlaßventil 11, 15 verbunden. Die Rückförderpumpe sowie die Einlaß- und Auslaßventile 11, 15 und 12, 16 werden von einem nicht dargestellten Steuergerät geschaltet, daß seine Schaltsignale nach einem bestimmten Regelalgorithmus ausgibt.

In diesem Regelalgorithmus werden vor allem Signale von verschiedenen Sensoren verarbeitet. Für eine Blockierschutzregelung sind die Signale von sogenannten Radsensoren notwendig, die das Drehverhalten der abzubremsenden Räder erfassen. Je nachdem welche Regelung durchgeführt werden soll, benötigt das Steuergerät weitere Sensorsignale. Für eine Fahrstabilitätsregelung werden z.B. die Signale eines Gierwinkelgeschwindigkeitssensors sowie eines Lenkradwinkelsensors benötigt. Für eine Fremdkraftbremsung, bei der eine rasche Vorbetätigung der Bremsen vor der eigentlichen Pedalbremsung erfolgen soll (Bremsassistent), wird das Signal eines Pedalsensors, der die Betätigung als solche und die Betätigungs-geschwindigkeit erfaßt, benötigt.

Um auch unabhängig von einer Pedalbetätigung einen Radbremsdruck aufzubauen zu könen, sind ein Umschaltventil 9 und ein Trennventil 10 vorgesehen. Das Trennventil 10 befindet sich in der Bremsleitung oberhalb des schon erwähnten Knoten 21, während das Umschaltventil 9 in einer Verbindungsleitung 14 zwischen der Saugseite der Rückförderpumpe 7 und dem Vorratsbehälter 4 eingefügt ist.

Da, wie schon erläutert, die Kammern des Hauptbremszylinders bei nicht betätigten Hauptbremszylinder 3 mit dem Vorratsbehälter 4 verbunden sind, ist die Verbindung bei diesem Ausführungsbeispiel auf die Weise hergestellt, daß die Verbindungsleitung 14 unmittelbar an eine der Kammern des Hauptbremszylinders 3 anschließt.

Um unabhängig von einer Pedalbetätigung einen Druck in den Radbremsen aufzubauen zu können, der in der sich an die Füllphase anschließenden Regelphase moduliert wird, wird das Trennventil 10 geschlossen und das Umschaltventil 9 geöffnet sowie die Rückförderpumpe 7 eingeschaltet. Diese saugt aus dem Vorratsbehälter 4 über das offene Umschaltventil Druckmittel in den Knoten 21, das von dort zu den Radbremsen 17, 18 gelangt, bis der Startbremsdruck erreicht ist. Der Rückfluß zum Vorratsbehälter 4 ist unterbunden, da das Trennventil 10 gesperrt ist. Ein parallel zum Trennventil 10 geschaltetes Druckbegrenzungsventil 22 stellt den Druck in der Bremsleitung unterhalb des Trennventils 10 auf einen maximalen Wert ein.

Der Startbremsdruck ist erreicht, sobald die jeweils wirksame Regelung (FSR, ASR) ein Absenken des Druckes in den Radbremsen einleitet. Die Regelung der Fremdkraftbremsung tritt nun in die eigentliche Regelphase ein, bei der der Druck in den Radbremsen durch Öffnen und Schließen der Einund Auslaßventile den jeweiligen Gegebenheiten angepaßt wird.

Für einige Fremdkraftbremsungen ist es besonders wichtig, daß der Bremsdruck rasch bis zum Startbremsdruck aufgebaut wird, also die Füllphase schnell durchlaufen wird.

Insbesondere in den Fällen, bei denen die Rückförderpumpe 7 als nicht selbstansaugende Pumpe ausgelegt ist, ist ein sogenannter Vorladedruckgeber notwendig, der bei diesem Ausführungsbeispiel im Verstärker 2 integriert ist. Der Verstärker weist ein Regelventil 8 auf, das vom Pedal 6 betätigt wird und in Abhängigkeit vom Pedaldruck einen Verstärkungsdruck einstellt. Dieses Regelventil erhält eine zusätzliche elektromagnetische Betätigung, so daß der Verstärker unabhängig von einer Pedalbetätigung ausgesteuert werden kann, um im Hauptbremszylinder 3 einen Vordruck aufzubauen, der in den Radbremsen zur Wirkung gebracht werden kann. Die Füllphase kann auf unterschiedliche Weisen realisiert werden. Die erste Möglichkeit besteht darin, daß in der Füllphase das Umschaltventil 9 geschlossen und das Trennventil 10 offen bleibt. Der Druck im Hauptbremszylinder wird dabei wie bei einer normalen Bremsung über die Bremsleitung zu den Radbremsen geleitet. Spätestens dann, wenn der Vordruck in den Radbremsen erreicht worden ist, muß das Trennventil 10 geschlossen und das Umschaltventil 9 geöffnet werden, so daß die Rückförderpumpe 7 einen über den Vordruck liegenden Druck in den Radbremsen aufbauen kann. Bei einigen Arten von Fremdkraftbremsungen kann auf diese Weise vorgegangen werden, da es nicht entscheidend auf die Schnelligkeit des Druckaufbaues ankommt. Diese Schaltungsvariante kann auch dann genutzt werden, wenn abzusehen ist, daß der Startbremswert geringer ist als der vom Vorladedruckgeber erzeugbare Vordruck.

Die zweite Möglichkeit besteht darin, in der Füllphase das Umschaltventil 9 zu öffnen, so daß mit Unterstützung der Pumpe ein rascher Druckaufbau in den Radbremsen erfolgen kann. Dabei kann zumindest bis zum Erreichen des Vordruckwertes in den Radbremsen das Trennventil 10 geöffnet bleiben. Signale für das Trennventil 10 und das Umschaltventil 9 sowie für das Bremsdruckregelventil 8 werden ebenfalls vom Steuergerät nach bestimmten Algorithmen generiert.

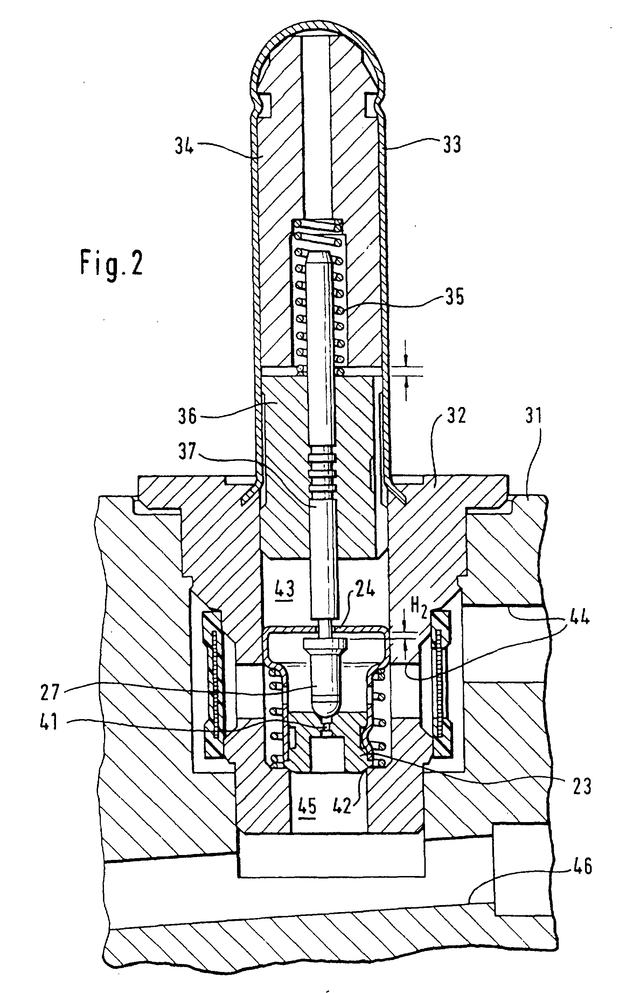

In Figur 2 ist ein mögliches Ausführungsbeispiel eines Umschaltventils 9 dargestellt. Das Umschaltventil weist ein Ventilgehäuse 32 mit einer Hülse 33 auf. In dieser Hülse sind hintereinander ein Magnetkern 34 sowie der dazugehörige Magnetanker 36 geführt. An der vom Magnetkern 34 abgewandten Stirnseite des Magnetankers 36 befindet sich ein Betätigungsstößel 37 mit einem Ventilschließglied 27, das unter Wirkung einer zwischen dem Magnetanker 36 und dem Magnetkern 34 eingespannten Feder 35 gegen einen Ventilkörper 23 gepreßt wird.

Das Ventil selbst besteht aus einem Vor- und einem Hauptventil und weist dazu zwei hydraulisch parallel geschaltete Durchgänge auf. Der Durchgang 41 des Vorventils ist im Ventilkörper 23 ausgebildet und wird unmittelbar vom Ventilschließglied 27 betätigt. Der Durchgang 42 des Hauptventils ist im Ventilgehäuse 32 ausgebildet und wird vom Ventilkörper 23 verschlossen, der damit das Ventilschließglied des Hauptventils bildet.

Die Durchgänge führen in eine Einlaßkammer 43, die über Querkanäle 44 im Ventilgehäuse 32 sowie in einem Ventilblock 31 mit dem Vorladedruckgeber, d.h. in diesem Fall mit dem Hauptbremszylinder 3 verbunden ist. Der Druck in der Einlaßkammer belastet das Ventilschließglied 27 und den Ventilkörper 23 jeweils in einem die Durchgänge schließenden Sinne.

Die Durchgänge führen auf der anderen Seite in eine Auslaßkammer 45, die mit einem im Ventilblock 31 angeordneten Querkanal 46 verbunden ist, der wiederum mit der Saugseite der Pumpe 7 in Verbindung steht. Die elektromagnetischen Betätigungskräfte, der Blendenquerschnitt des Vorventils sowie die Feder 35 sind so auf einander abgestimmt, daß je nach anliegendem Vordruck in der Einlaßkammer 42 das Ventil entweder in eine offene, bei der beide Durchgänge geöffnet sind, oder in eine halboffene gedrosselte Stellung gelangt, bei der lediglich das Vorventil geöffnet ist. Erfolgt die Betätigung des Umschaltventils zu Beginn der Füllphase, wo noch nicht der volle mögliche Vordruck in der Einlaßkammer ansteht, öffnet das Ventil zweistufig, d.h. es wird zunächst das Vorventil geöffnet, wobei schon ein gewisser Druckausgleich zwischen Einlaßkammer und Auslaßkammer erfolgt, und sodann bei weiterer Anhebung des Magnetankers 36 nach Überwindung des Leerweges H₂ der Leerwegkupplung 24 unter Mitnahme des Ventilkörpers 23 das Hauptventil, so daß der volle Querschnitt des Ventils zur Verfügung steht.

Erfolgt die Umschaltung des Schaltventils aber zu einem späteren Zeitpunkt, nämlich dann, wenn die Füllphase abgeschlossen ist und die Bremsanlage in die eigentliche Regelung übergeht, dann wird zwar das Vorventil geöffnet das Hauptventil bleibt aber geschlossen, da in der Einlaßkammer 43 der volle Vordruck herrscht.

Da das Druckmittel durch die nun geöffnete Blende des Vorventils im Mittel im stetigen Fluß zur Rückförderpumpe fließt, entsteht an dieser Blende ein Druckgefälle mit einem hohen Druck in der Einlaßkammer 43 und einem niedrigen Druck in der Auslaßkammer 45. Dieses Druckgefälle wirkt auf den wirksamen Durchmesser des Ventilkörpers 23, womit eine so hohe Schließkraft ausgeübt wird, daß die elektromagnetische Betätigungskraft nicht mehr in der Lage ist, diese zu überwinden. Unter Druck geschaltet bleibt somit das Umschaltventil 7 in einer gedrosselten Schaltposition.

Diese Drosselung bewirkt, daß Schwingungen in der Druckmittelsäule vor der Rückförderpumpe, ausgelöst durch das Öffnen und Schließen des Saugventils der als Kolbenpumpe ausgebildeten Rückförderpumpe 7, gedämpft werden, wobei gleichzeitig die Geräuschbildung minimiert wird.

Die Eigenschaften des Ventils haben zur Folge, daß es unter Vordruck nicht direkt von einer offenen in eine gedrosselte Stellung gebracht werden kann. Dazu ist es vielmehr notwendig, daß es zunächst geschlossen wird, um erneut geöffnet zu werden, wobei es bei diesem Schaltvorgang - wie oben erläutert - in die gedrosselte Stellung gebracht wird. Dazu muß in der Steuerschaltung eine entsprechende Schaltfolge vorgesehen sein, die in den Fällen ausgelöst wird, in denen das Umschaltventil 9 in der Füllphase voll geöffnet und in der Regelphase gedrosselt sein soll.

### Bezugszeichenliste:

- 1: Bremsdruckgeber
- 2: Verstärker
- 3: Hauptbremszylinder
- 4: Vorratsbehälter
- 6: Pedal
- 7: Rückförderpumpe
- 9: Schaltventil
- 10: Trennventil
- 11: Einlaßventil
- 12: Auslaßventil
- 13: Niederdruckspeicher
- 14: Verbindungsleitung
- 15: Einlaßventil
- 16: Auslaßventil
- 17: Radbremse
- 18: Radbremse
- 21: Knotenpunkt
- 22: Druckbegrenzungsventil
- 23: Ventilkörper
- 24: Leerwegkupplung
- 27: Ventilschließglied
- 31: Ventilblock
- 32: Ventilgehäuse
- 33: Hülse
- 34: Magnetkern
- 36: Magnetanker
- 37: Betätigungsstößel
- 41: Durchgang
- 42: Durchgang
- 43: Einlaßkammer
- 44: Querkanal
- 45: Auslaßkammer
- 46: Querkanal

## Patentansprüche

1. Hydraulische Fahrzeugbremsanlage mit einem vom Fahrer des Fahrzeuges betätigbaren Bremsdruckgeber (1), mindestens einen daran angeschlossenen Bremskreis mit Radbremsen (17, 18) und Druckmodulationsventilen (11,12, 15,16), mit deren Hilfe der Druck in den Radbremsen nach vorgegebenen Regelalgorithmen moduliert werden kann,
einer Pumpe (7), die Druckmittel in einen Bremskreis fördert, um das für die Modulation des Radbremsdruckes aus den Bremskreisen entnommene Druckmittel auszugleichen,
einem Trennventil (11) zwischen dem Bremsdruckgeber (1) und einem angeschlossenen Bremskreis,
einem vorladedruckgeber (2, 8), dessen druckseitiger Ausgang unter Zwischenschaltung eines Umschaltventils (9) an die Saugseite der Pumpe (7) anschließt, um zur Realisierung einer Fremdkraftbremsung während einer Füll- und einer Regelphase Druckmittel an der Saugseite der Pumpe zur Verfügung zustellen, und einem Steuergerät zur Auswertung von Sensorsignalen und zur Bereitstellung von Schaltsignalen für die Pumpen und Ventile,
**dadurch gekennzeichnet,**
**daß** das Umschaltventil (9) drei Schaltstellungen ausweist, nämlich eine geschlossene, eine offene und eine gedrossselte, und daß das Steuergerät so ausgelegt ist, daß bei einer Fremdkraftbremsung in der Regelphase das Umschaltventil (9)in seine gedrosselte Stellung gebracht wird, und daß das Steuergerät mindestens einen Regelalgorithmus aufweist, mit dem das Umschaltventil (9) in der Füllphase in die offene Stellung gebracht wird.

2. Bremsanlage nach Anspruch 1, **dadurch gekennzeichnet, daß** das Steuergerät eine Entscheidungsschaltung aufweist, die den in der Füllphase zu erreichenden Startbremsdruck bestimmt und das Umschaltventil (9) in der Füllphase in seiner geschlossenen Stellung beläßt, wenn der so bestimmte Startbremsdruck kleiner ist als der vom Vorladedruckgeber zur Verfügung gestellte Druck.

3. Fahrzeugbremsanlage nach Anspruch 1 oder 2, **dadurch gekennzeichnet, daß** das Umschaltventil (9) als bistabiles Ventil ausgebildet ist, das in Abhängigkeit vom Eingangsdruck bei gleicher Betätigungskraft entweder die gedrosselte bzw. in die offene Stellung schaltet.

4. Fahrzeugbremsanlage nach Anspruch 3, **dadurch gekennzeichnet, daß** das Schaltventil (9) zwei parallel geschaltete Ventile (41,42) aufweist, nämlich ein Vorventil und ein Hauptventil, wobei der Ventilsitz des einen Ventils am Ventilschließglied des anderen Ventils ausgebildet ist und daß beide Ventilschließglieder mittels eines einzigen Betätigungsstößels(37) betätigbar sind.

5. Fahrzeugbremsanlage nach Anspruch 4, **dadurch gekennzeichnet, daß** das Ventilschließglied (23) des Hauptventils über eine Leerwegkupplung (24) mit dem Betätigungsstößel (37) gekoppelt ist.

6. Fahrzeugbremsanlage nach Anspruch 5, **dadurch gekennzeichnet, daß** das Umschaltventil (9)in seiner nicht betätigten Stellung geschlossen ist und daß das Ventilschließglied (23) des Hauptventils einen an die Einlaßkammer (43) des Ventils angrenzende Wirkfläche aufweist, so daß bei einer bestimmten auf das Ventilschließglied (23) einwirkenden Druckdifferenz die Betätigungskraft nicht ausreicht, das Hauptventil (42) zu schalten.

7. Bremsanlage nach einem der vorhergehenden Ansprüche, **dadurch gekennzeichnet, daß** das Steuergerät zum Umschalten des Ventils von der offenen in die gedrosselte Stellung eine Schaltsignalfolge erzeugt, bei dem die elektromagnetische Betätigung des Umschaltventils (9) zunächst stromlos gestellt wird, so daß das Umschaltventil schließt, und daß anschließend ein Schaltsignal generiert wird, so daß das Umschaltventil (9) bei einem in der Einlaßkammer anliegenden Vordruck in die gedrosselte Stellung schaltet.

## Claims

1. Hydraulic vehicle brake system which includes a brake pressure generator (1) operable by the driver of the vehicle,
at least one brake circuit connected thereto with wheel brakes (17, 18) and pressure modulation valves (11, 12, 15, 16) by means of which the pressure in the wheel brakes can be modulated according to predetermined control algorithms,
a pump (7) which delivers pressure fluid into a brake circuit in order to balance out the pressure fluid removed from the brake circuits for the modulation of the wheel brake pressure,
a separating valve (11) between the brake pressure generator (1) and a connected brake circuit,
a precharging pressure generator (2, 8) having its pressure-side outlet connected to the suction side of the pump (7) by the intermediary of a change-over valve (9) in order to deliver pressure fluid to the suction side of the pump during a filling and a control phase for achieving an independent force braking operation, and a control device for evaluating sensor signals and for providing switching signals for the pumps and valves,
**characterized in that** the change-over valve (9) has three switching positions, i.e., a closed one, an open one, and a throttled one, and **in that** the control device is so configured that in an independent force braking operation the change-over valve (9) is caused to adopt its throttled position in the control phase, and **in that** the control device includes at least one control algorithm which causes the change-over valve (9) in the filling phase to adopt its open position.

2. Brake system as claimed in claim 1,
**characterized in that** the control device includes a decision-making circuit which determines the starting brake pressure that is to be achieved in the filling phase and maintains the change-over valve (9) in its closed position in the filling phase if the so determined starting brake pressure is lower than the pressure provided by the precharging pressure generator.

3. Vehicle brake system as claimed in claim 1 or 2,
**characterized in that** the change-over valve (9) is configured as a bistable valve which switches into the throttled or into the open position as a function of the inlet pressure, with the actuating force being equal.

4. Vehicle brake system as claimed in claim 3,
**characterized in that** the switching valve (9) has two parallel connected valves (41, 42), i.e., a pilot valve and a main valve, and the valve seat of the one valve is provided on the valve closure member of the other valve, and **in that** both valve closure members are operable by means of one single actuating tappet (37).

5. Vehicle brake system as claimed in claim 4,
**characterized in that** the valve closure member (23) of the main valve is coupled to the actuating tappet (37) by way of a lost motion clutch (24).

6. Vehicle brake system as claimed in claim 5,
**characterized in that** the change-over valve (9) is closed in its non-actuated position, and **in that** the valve closure member (23) of the main valve has an effective surface which is adjacent to the inlet chamber (43) of the valve so that the actuating force is not sufficient to switch the main valve (42) when a defined pressure difference acts upon the valve closure member (23).

7. Brake system as claimed in any one of the preceding claims,
**characterized in that** the control device generates a switching signal sequence to switch the valve over from the open into the throttled position, and the electromagnetic actuation of the change-over valve (9) is initially rendered deenergized so that the change-over valve closes, and **in that** subsequently a switching signal is generated so that the change-over valve (9) is moved to adopt the throttled position when an initial pressure prevails in the inlet chamber.

## Revendications

1. Système hydraulique de freinage de véhicule comportant un transducteur de pression de freinage (1), qui peut être actionné par le conducteur du véhicule,
au moins un circuit de freinage raccordé à celui-ci avec des freins de roue (17, 18) et des soupapes de modulation de pression (11, 12, 15, 16), à l'aide desquelles la pression peut être modulée dans les freins de roue suivant des algorithmes de régulation prédéterminés,
une pompe (7) qui fait circuler un fluide sous pression dans un circuit de freinage, afin de compenser le fluide de pression prélevé des circuits de freinage, pour la modulation de la pression des freins de roue,
une soupape de séparation (11) entre le transducteur de pression de freinage (1) et un circuit de freinage raccordé,
un transducteur de pression de précharge (2, 8) dont la sortie côté refoulement se raccorde, par interposition d'une soupape de commutation (9), au côté aspiration de la pompe (7), afin de mettre à disposition du fluide sous pression, sur le côté aspiration de la pompe, pour réaliser un freinage assisté pendant une phase de remplissage et de régulation,
et comportant un appareil de commande pour l'interprétation de signaux des capteurs et pour préparer des signaux de commutation pour les pompes et les soupapes,
**caractérisé**
**en ce que** la soupape de commutation (9) comporte trois positions de commutation, à savoir une position fermée, une position ouverte et une position réduite, et en ce que l'appareil de commande est conçu de manière que dans le cas d'un freinage assisté pendant la phase de régulation, la soupape de commutation (9) passe dans sa position réduite, et en ce que l'appareil de commande comporte au moins un algorithme de régulation au moyen duquel la soupape de commutation (9) est amenée, pendant la phase de remplissage, dans la position ouverte.

2. Système de freinage selon la revendication 1, **caractérisé en ce que** l'appareil de commande comporte un circuit de décision qui détermine la pression de freinage de départ, à obtenir dans la phase de remplissage, et qui laisse la soupape de commutation (9) dans sa position fermée, pendant la phase de remplissage, lorsque la pression de freinage de départ ainsi déterminée est inférieure à la pression mise à disposition par le transducteur de pression de précharge.

3. Système de freinage de véhicule selon la revendication 1 ou 2, **caractérisé en ce que** la soupape de commutation (9) est réalisée en tant que soupape bistable qui commande soit la position réduite, soit la position ouverte, en fonction de la pression d'entrée, pour une même force d'actionnement.

4. Système de freinage de véhicule selon la revendication 3, **caractérisé en ce que** la soupape de commutation (9) comporte deux soupapes (41, 42) montées en parallèle, à savoir une soupape pilote et une soupape principale, le siège d'une soupape étant réalisé sur l'obturateur de l'autre soupape et **en ce que** les deux obturateurs des soupapes peuvent être actionnés au moyen d'un seul poussoir d'actionnement (37).

5. Système de freinage de véhicule selon la revendication 4, **caractérisé en ce que** l'obturateur de soupape (23) de la soupape principale est accouplé, par un accouplement à course à vide (24), avec le poussoir d'actionnement (37).

6. Système de freinage de véhicule selon la revendication 5, **caractérisé en ce que** la soupape de commutation (9) est fermée dans sa position non actionnée et **en ce que** l'obturateur de soupape (23) de la soupape principale présente une surface active, adjacente à la chambre d'entrée (43) de la soupape, ce qui fait que dans le cas d'une différence de pression déterminée, agissant sur l'obturateur de soupape (23), la force d'actionnement ne suffit pas pour faire commuter la soupape principale (42).

7. Système de freinage selon l'une des revendications précédentes, **caractérisé en ce que** pour faire commuter la soupape de la position ouverte dans la position réduite, l'appareil de commande produit une séquence de signaux de commutation pour laquelle l'actionnement électromagnétique de la soupape de commutation (9) ne reçoit d'abord pas de courant, ce qui fait que la soupape de commutation se ferme, et **en ce qu'**ensuite est généré un signal de commutation, ce qui fait que la soupape de commutation (9) commute dans la position réduite, dans le cas d'une pression d'admission s'appliquant dans la chambre d'admission.
